# EUROPEAN PATENT SPECIFICATION

(11) **EP 3 056 787 B1**
(45) Date of publication and mention of the grant of the patent: **01.08.2018**
(21) Application number: 13895420.1
(22) Date of filing: 07.10.2013
(51) Int. Cl.: F16L 55/26, B05B 5/14, B08B 9/047, B05B 13/06, B05B 7/16, F16L 55/44, F16L 101/30, F16L 101/16, C23C 4/06

(54) **METHOD AND DEVICE FOR INSPECTING AND RESTORING DUCTS**
VERFAHREN UND VORRICHTUNG ZUR ÜBERPRÜFUNG UND WIEDERHERSTELLUNG VON KANÄLEN
PROCÉDÉ ET DISPOSITIF POUR L'INSPECTION ET LA RÉGÉNÉRATION DE CONDUITS

(43) Date of publication of application: 17.08.2016
(73) Proprietor: Ingeniería Y Marketing, S.A., 46015 Valencia (ES)
(72) Inventor: LACALLE BAYO, Jesús, 46015 Valencia (ES); VAQUER PEREZ, Juan Ignacio, 46015 Valencia (ES); MORENO MUÑOZ, Miguel, E-46019 Valencia (ES)
(74) Representative: Sanz-Bermell Martinez, Alejandro
(86) International application number: PCT/ES2013/070688
(87) International publication number: WO 2015/052353

(56) References cited:
- EP-A1- 0 164 557
- EP-A2- 0 315 038
- EP-A2- 1 486 755
- WO-A1-2011/054977
- WO-A2-2010/098678
- DE-A1- 3 301 548
- DE-A1-102011 007 826
- GB-A- 2 415 762
- GB-A- 2 487 524
- US-A- 5 623 107
- US-A1- 2002 003 173

## Description

This invention refers to a method for treating the inner surfaces of conduits, such as vapour conduction installation conduits, for example in installations for electric power production; according to this method, a detection and/or metal thermal spraying device is deployed through an end of a conduit or a manhole in this, and taken to the end furthest from its insertion. It comprises the operations of positioning, centring, also inspecting the result where applicable, and returning to a position closer to the point of insertion. It also includes recognising any changes in direction of the conduit by mechanical, optical, acoustic or electric means, and repositioning the device in respect of any such changes in direction.

This invention also comprises a device for recognition and detection of the condition of the conduit, and the presence of certain substances and/or the treatment of the inner surfaces of conduits, consisting, amongst others, of a device for metal thermal spraying, pulling means, centring means for a head for projecting particles of molten metal, pulling means and possibly means for detecting any changes in direction of the conduit. The device also includes means for supplying power and feeding the metal to be projected.

Vapour conduits of all kinds of industrial installations, such as the vapour conduits in energy production installations, are subject to aggression through abrasion due to the great speed at which the vapour circulates, and this can be worsened by possible chemical aggression due to the ionisation of the vapour. Over time the abrasion can become serious and can weaken the conduits. On one hand such installations are extremely costly, which is why the replacement of material that can be preserved must be avoided as far as possible, and on the other, the use of a vapour installation in unsafe conditions proves to be extremely dangerous, as any pore forming in the conduits would, apart from involving a great risk for the safety of any operator being hit by the blast coming out, require the immediate stoppage of the installation, the replacement of the damaged section, and a thorough check of the entire installation, which would entail very high costs. Since there is always wear, the material dragged off by the vapour has to be replaced, so as to maintain the initial conditions, or at least safe conditions. Furthermore, in vapour conduits at nuclear installations there is a risk of leaks of radioactive particles, which could get into the fluid of the turbine circuit. In chemical industry installations there could also be toxic elements or compounds that must be detected in order to take the relevant corrective measures.

### State of the art

US 6508413, or the corresponding application pamphlet US 2002/0003173, describes a machine for remote cleaning and coating of a conduit, such as a vapour conduit. This machine comprises a support bar fitted with associated motors for moving a head along the bar and for rotating the head, this head comprising means for abrasion cleaning and/or for metal thermal spraying. For proper positioning and securing in the pipeline it comprises at least one pair of tripods, and also comprises a device for control of the assembly. This device has to work by sections, since the device has to be repositioned in each of these sections, at the same time as there being zones, such as the zones for supporting the tripod legs, which could have deficiencies in the coating and will in any event require reducing the distances at which the device has to be located in each new stretch.

FR 2898635 describes a traction module suitable to be descended in the well of a fluid exploitation installation. It comprises a main body with one or more traction wheels. The main body has an arm which can be unfolded in radial direction, having a wheel in its end, to press on the well wall opposite to the traction means. It discloses also the use of a front and rear elements supporting motors thereof, which comprise centring pieces with an articulation mechanism also to be unfolded in radial direction, having each a wheel.

Since the wheel at the end of the arm and the wheels at the centring pieces are to be used as guiding means with the module being moved, the axles of each of the wheels are transversal to allow its longitudinal rotation while the module is in movement.

DE 33 01 548 A1 refers to an apparatus for spray coating, especially the internal walls of hollow workpieces, having a spray gun, which is supplied, from supply sources via supply ducts, with combustion and atomising gases, and/or if necessary electric arc current, and which melts, in a burner gas flame or an electric arc, spray material supplied in a supply channel, and which blows out the molten spray material as a fine particle jet by means of the atomising gas; In order to be able to spray even large workpieces, containers or pipes with uniform layers of constant thickness while the workpiece is stationary, the apparatus has a frame which is displaceable within the interior in the longitudinal direction of the workpiece and on which a rotary arm is rotatably mounted and carries the spray gun at a predetermined distance from its axis of rotation which points in the longitudinal direction, the nozzle opening of the spray gun being directed against the workpiece. A rotary lead-through is provided coaxially with the axis of rotation of the rotary arm, and connects the sections of the supply ducts fixed to the supply sources with the sections of the supply ducts which are fixed to the gun. A drive is situated on the frame and sets the rotary arm in rotary motion.

WO 2011/054977 A1 The method comprises the insertion, into a conduit, of a device that comprises a vehicle provided with rolling means, which carries the thermal spraying means; the insertion of electrical, pneumatic and/or hydraulic lines and also a line for supplying the metal to be thermally sprayed; the positioning of the regeneration device by means of remote-controlled entrainment to a specific position to be regenerated; the thermal spraying of metal; and forward movement to a new position. The device is formed by a remote-controlled vehicle, which carries the device for the thermal spraying of metals; a thermal spraying head arranged on the vehicle, and capable of being positioned and oriented in a suitable manner; electrical, pneumatic and/or hydraulic supply connections and connections for control and manoeuvring of the vehicle and of the thermal spraying device.

EP 0 315 038 A2 describes a device for joint sealing in concrete tubes only by pouring in the bottom region or by introducing a joint strip designed as a lip seal. In these cases, the sealing force is low, with the result that the liquid passing through the tubing may leak out in the event of relatively high pressures. By cutting open the joint to a predetermined depth and predeterminable width, the possibility is provided for fitting strand- like seals with high compression, and to do so over the entire tube circumference, thus guaranteeing perfect sealing even for a high liquid pressure.

None of the cited documents relates to a device to allow a transversally displacement on a pipe surface to smoothly centring a spraying device inside the pipe.

Description of the invention

This invention covers a mobile device able to move along a conduit, especially a horizontal or slightly sloping conduit, which comprises:
- A moving support; the moving support will be fitted with at least one drive motor, and possibly have one or more motors on each of the sides;
   - A set of means for pulling this moving support along the surface of the conduit; the pulling means could be wheels, chains or pulling strips.
      ∘ The pulling means could possibly be located more or less radially on the centre of the device, and preferably these pulling means should be radially extendible for proper adjustment on the section of the conduit;
      ∘ A set of auxiliary means for transversal sliding fitted with extension means for extending the pulling and centring means of the device, which will enable the pulling means to slide transversally along the concave surface of the tube to the required position, and which will retract when they have reached the required extension position; these pulling means are preferably wheels or rollers provided with extension mechanisms, such as pneumatic or hydraulic cylinders or by means of an electro-mechanical drive or an electric motor;
   - An operating head set at the front of the moving support;
      ∘ The operating head is preferably rotary, normally turning through an arc of 360º or a little more, said rotation being limited by the cables and conduits that the device has to hold;
   - A device for thermal spraying of molten metal particles, the thermal spraying device being set in the operating head. The thermal spraying device may in turn be hinged on the operating head on a transversal axle to that of the conduit;
   - At least one means for power supply; the power used can be electrical energy - the power supply means being a cable or set of cables inserted in the conduits through the manhole or the open end of the conduit as far as the regeneration device - hydraulic energy and/or pneumatic energy; in these last two cases the required conduits or flexible hoses would be used;
   - A means for feeding the metal to be projected, in the form of wire or wire coils;
   - And possibly:
      ∘ A device for detecting the state of the regenerated surface, understanding state to mean the degree of quality of the coated surface;
      ∘ A display device.

### Brief description of the figures

In order to illustrate the following explanation, we are enclosing with this descriptive report three sheets of drawings, in which the essence of this invention is represented in six figures, and in which:

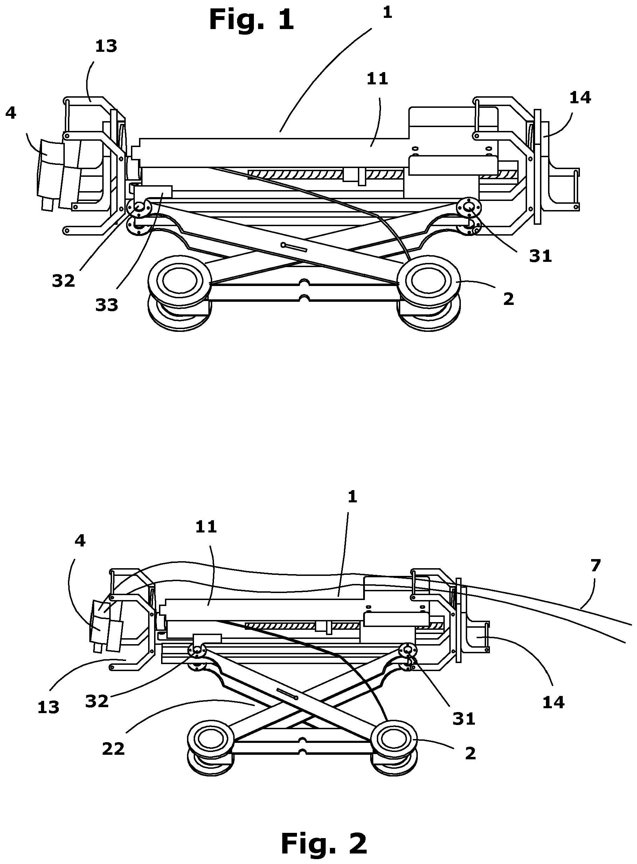

- Figure 1: shows a lateral schematic view of a second option for the device of the invention, in which the body of the device comprises two sets of wheels set apart at an angle, is expandable and extendible to adapt to the conditions of the conduit, in retracted position;
- Figure 2: shows a lateral schematic view similar to that of Figure 1, but in the expanded position;

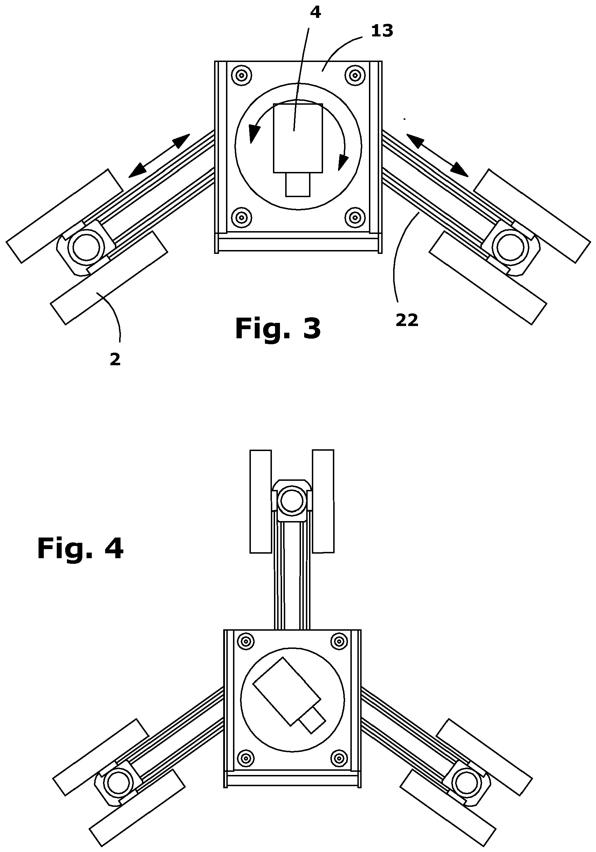

- Figure 3: shows a front view of the device of Figures 1 and 2, in which one can clearly see the angular separation of the wheels;
- Figure 4: shows a view like that of Figure 3, in which the device is provided with three sets of wheels;

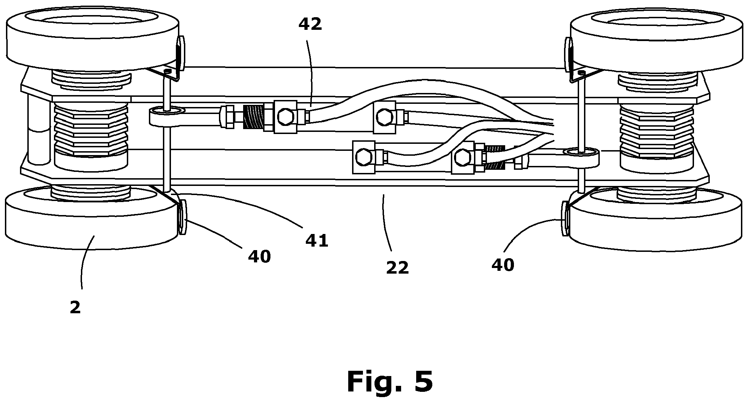

- Figure 5: shows a perspective view of one of the rolling gear assemblies, with a set of retracted transversally sliding auxiliary wheels, hidden between the pulling wheels;

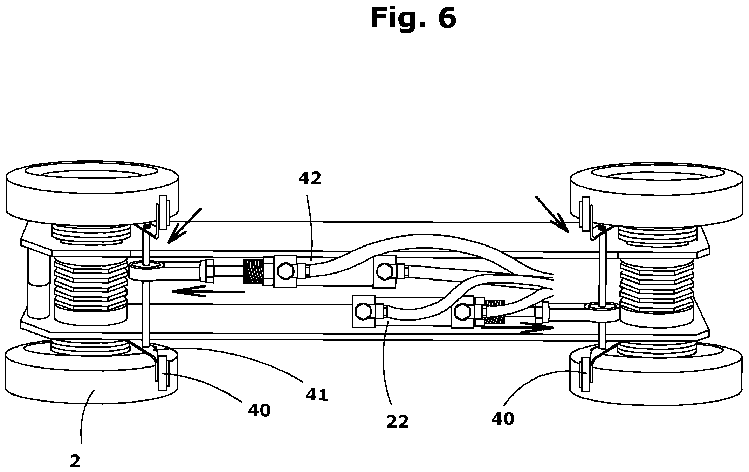

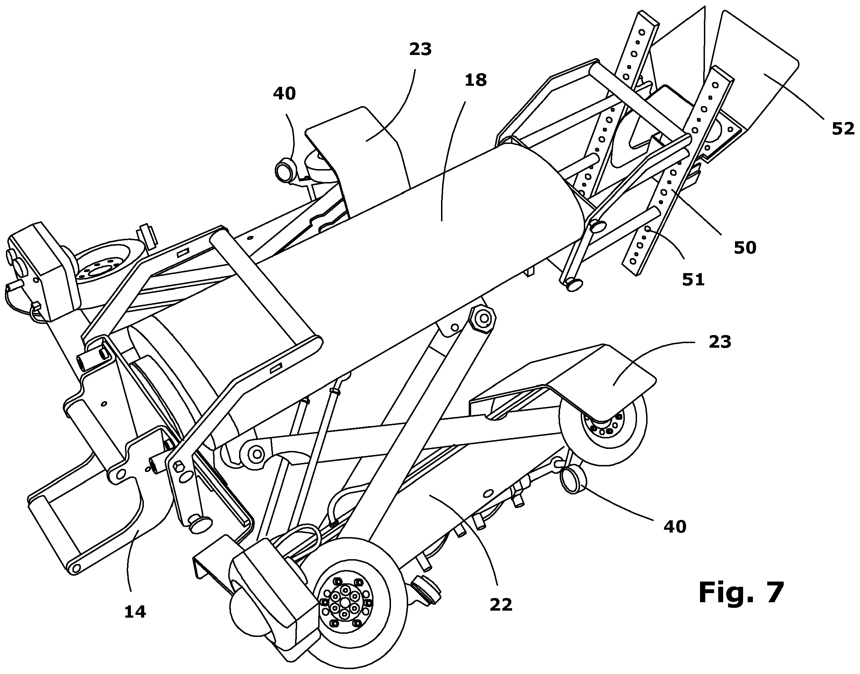

- Figure 6: shows a view like that of Figure 7, but in which transversally sliding auxiliary wheels are extended and project out from the support of the pulling wheels, and
- Figure 7: shows a general perspective view of the device covered by the invention, provided with covers for the wheels, viewing cameras and supports for the lighting devices.

### Detailed description of the preferential forms of embodiment

This invention thus consists of a method for regenerating inner surfaces of conduits by means of thermal spraying of metals which comprises the stages of:
- inserting a device carrying the thermal spraying means through a manhole of a conduit installation; this should be inserted with the device retracted and as far as the operating point furthest from the entry point;
- adjusting the radial position of an operating head in respect of the longitudinal axle of the device; this adjustment can be performed by mechanical means and manual fixing on a multi-position support or automatically by means of slides driven by means of an electric motor, or by hydraulic or pneumatic means;
- inserting electrical, pneumatic and/or hydraulic conduits through the manhole, as well as conduits for supplying the metal for thermal spraying;
- the extension of transversal rolling or sliding means which raise the wheels from the surface and prevent these from brushing this during the process for expanding the rolling assembly;
- the expansion of the rolling assembly, this being raised in respect of the transversal rolling or sliding means, so that the device is properly fitted in the conduit, normally ensuring that the device is centred in the conduit;
- moving the device by a remotely-driven pulling system to a specific part to be regenerated, including, where applicable the relevant securing means, normally getting closer towards the inlet mouth;
- positioning an operating head set in the carrying device;
- the metal thermal spraying from the regeneration device and/or the detection of the corresponding parameters according to the operating head;
- rotating around the surrounding annular perimeter, normally roughly 360º, until proper regeneration is ensured and
- returning to a new regeneration position closer to the inlet mouth.

The method also comprises the use of, and where necessary alignment with the surface of, another kind of sensors for picking up chemical compounds or elements, measuring radioactivity, or the thickness of the conduit, for example with X rays, ultrasounds or others.

Since the amount of fumes and dust that may be produced in some of the processes to be carried out is enormous, the method also includes injecting air inside the device, generating positive pressure to prevent particles from getting into this with the ensuing early deterioration of the equipment.

The method also optionally comprises picking up an image of the interior of the conduit and transmitting the information to a device for recording, viewing or information processing, located on the outside, from which the right decisions can be made, such as for a further movement of the carrying device to regenerate a new zone, extraction of the device, or continuation of the spraying process if the regeneration has not reached a satisfactory degree.

The method is also designed to include, as well as or instead of picking up the graphic image, measuring the thickness of the walls of the conduit or measuring prior to or after the thermal spraying phase, determining in either of these cases if the operation has achieved a sufficiently satisfactory result.

This invention also covers a device for inspecting and regenerating inner surfaces of conduits by the metal thermal spraying, as claimed in claim 8, which is made up of:
- A remote-controlled vehicle (1), carrying a device for the metal thermal spraying (4), and/or other sensor or detection devices, able to be inserted through a manhole for an installation of conduits such as an installation for energy production; this vehicle (1) comprises, in a preferential embodiment, an elongated structure (11) carrying pulling means and fitted with a protection cover (18), and with sensors and/or means for carrying a device for metal thermal spraying: the vehicle (1) is fitted with a set of wheels or pulling chains (2); according to the preferential embodiment, the vehicle (1) comprises at least two sets of wheels (22) (which could also be pulling belts or chains), separated at an angle of roughly 120º ± 40º, fitted with at least one front wheel and at least one rear wheel, normally a pair of front wheels and a pair of rear wheels, at least one of the front or rear wheels or pairs of wheels being fitted with a drive motor; each front or rear wheel or pair of wheels will preferably be fitted with an independent drive motor; optionally, though not preferably, three or more sets of wheels (22) will be fitted, separated from each other at a suitable angle. Each of the sets of wheels is able to be expanded or retracted, so that the dimensions of the device are the very minimum for inserting into the conduit, then having the proper operating dimensions inside the conduit;
- auxiliary sliding or rolling means (40) for the sets of wheels (22), which can be in two positions; a withdrawn or retracted position in which said auxiliary sliding or rolling means (40) is located over the surface of the wheels or pulling chains, and an extended position, in which said auxiliary sliding or rolling means is under the pulling wheels or chains (over and under being understood to be the positions in which said auxiliary means comes into contact with the surface of the conduit or is separated from this), preventing contact of these wheels or pulling chains with the surface of the tube, so that when the pulling wheel or chain support expands, the linear distance of the wheel sets or pulling chain between each other increases, which forces a respective transversal movement of at least some of these in respect of the surface of the conduit. In the extended position, it is the transversal wheels which come into contact with the conduit, the pulling wheels being separated from this conduit so that said transversal movement takes place gently and without generating any unnecessary tensions, which works out in better operation and less wear of the equipment, for a longer time and reducing the scale of some of its repairs; according to a preferential embodiment the operation is by means of a cam (41) carrying the auxiliary sliding or rolling means (40), driven by an actuator (42), normally pneumatic, but which can also be hydraulic, or electromechanical, for example. An operating head (13) set on the vehicle, normally at the front (the opposite side to where the cables are connected) able to be positioned and angled properly in respect of said vehicle, comprising a metal thermal spraying device (4) of particles of molten metal and/or other sensor devices; the operating head (13) is able to rotate on a longitudinal axle; it is desirable for the rotation to take place at an angle close to 360º, so that in the thermal spraying phase the regeneration takes place in the same way over the whole corresponding annular surface; if the support for the cables and conduits allows this, depending on the type of operation being carried out, the rotation can be continuous, so that the head can make more than one turn with no need to return to an initial position; this option will nevertheless not be operative in the case of having different connections (air, wire, electricity, control) since continuous rotation would mean these connections would gradually be twisted;
- A device for metal thermal spraying (4); this thermal spraying device will normally be hinged on the operating head (13) on an axle transversal to that of the conduit; and a means of supplying the metal to be projected, in the form of wire or wire coils;
- Other devices for detecting radioactivity, the thickness of the conduit and any chemical substances present in the conduit;
- Electrical (7), pneumatic and/or hydraulic connections for supplying, controlling and manoeuvring the vehicle (1) and the head fitted with the thermal spraying device (4) fitted on the remote-controlled vehicle (1).

The rear end of the vehicle also comprises a securing device (14) for the cables, wire, or other conduits, and this securing device is preferably able to rotate freely so that when the operating head located at the front of the device pulls the cables, these are supported at the rear, allowing their securing and rotation as required by the rotation of the operating head (13).

At least the wheels (2) closest to the operating head (13) are provided with a protection cover (23).

The device according to the invention is designed to also comprise a device for detecting the thickness and/or the surface evenness of the regenerated surface or also a device for picking up the image inside the conduit and transmitting the information to a device for recording, displaying or information processing.

The device also comprises a set of auxiliary items, which include:
- Devices for front and rear lighting;
- Display cameras facing forward and rearward;
- An interior outlet for compressed air which generates positive pressure preventing dirt from getting inside the machine.

The device disclosed in the invention comprises means of control for adjusting the position of the operating head.

The operating head (13) preferably comprises a support made up of two parallel bars (50) with multiple perforations (51) which enable fitting the head device (whether this is the thermal spraying device or any sensor) at the right distance depending on the requirements of each device, in any event sweeping the area of 360° around the operating head (13).

It is envisaged that the operating head (13) should also comprise certain plates (52) for protection of the device when operating.

In a preferential embodiment, the expansion/retraction system for the wheel sets (22) is implemented by means of a fixed axle (31) (for each set) fitted in the elongated structure (11), as well as a corresponding mobile axle (32) able to be slid along by means of a track (33); as the axles approach each other, the angle of the corresponding carrying bars increases in respect of said elongated structure, causing the end where the corresponding wheels are located to move away.

For the sake of simplification, weight and mobility, it is designed for at least one of the bars shorter than the maximum acceptable length to be used in small-sized conduits (around 32 inches). In tubes with a larger section it will be necessary to provide the device with bars at their maximum length so that when this extends like a pantograph the height at which this can be located is greater.

The use of stiffening braces for providing the extended assembly with greater stability is intended.

The bars forming the extendible pantograph are normally made of steel and are covered with a slippery material such as Teflon.

## Claims

1. A method for regenerating inner surfaces of conduits by means of metal thermal spraying, comprising the steps of
- inserting a device carrying the sensor devices or thermal spraying means through a manhole of a conduit installation, this device consisting of a vehicle (1) fitted with longitudinal rolling means;
- inserting electrical, pneumatic and/or hydraulic conduits through the manhole, as well as conduits for supplying the metal for thermal projection, where necessary;
- positioning the regenerating device by a remotely-driven pulling system in a specific position to be regenerated, and
- detecting parameters by means of sensor devices;
- metal thermal projection from the device carrying the sensor devices and the thermal spraying means;
- moving on to a new detection or regeneration position;
in which the device is inserted into the conduit with the device retracted, and after the device has been inserted, the longitudinal pulling means expand radially until the device is centred in said conduit;
**characterised in that this also comprises**
a stage for expansion of auxiliary transversal rolling means of the pulling means, which separate and prevent contact of the longitudinal pulling means with the surface of the conduit during the expansion stage of said longitudinal pulling means, and
a stage for retraction of the auxiliary transversal rolling means, prior to the start of the operation stage.

2. A method, according to claim 1, **characterised in that** before starting the operation the device is inserted to the position furthest away, and **in that** the advance to the next regeneration position takes place by moving the device backwards.

3. A method, according to any of claims 1 to 2, **characterised in that** this includes inserting air inside the body of the device to generate a positive pressure inside such body such positive pressure preventing dirt from getting in.

4. A method, according to any of claims 1 to 3
**characterised in that** this also comprises the angle-orientation of an operating head fitted in a carrying device.

5. A method, according to any of claims 1 to 4 **characterised in that** this also comprises rotating the device for metal thermal spraying along the surrounding annular perimeter at a maximum angle of roughly 360º.

6. A method, according to any of claims 1 to 5 **characterised in that** this also comprises picking up an image of the interior of the conduit and transmitting the information to a device for recording, viewing or information processing.

7. A method, according to any of the previous claims, **characterised in that** this also comprises measuring the thickness of the conduit before and/or after the regeneration.

8. A device for inspecting and regenerating inner surfaces of conduits by means of metal thermal spraying, for carrying out the method of claim 1, made up of:
- a remote controlled vehicle (1), carrying sensor devices and a device for thermal projection of metals (4), able to be inserted in a manhole of a conduit installation, such as a power generation installation, this vehicle comprising (1) an elongated structure (11) provided with at least two sets of pulling wheels (22), separated at an angle of roughly 120º ± 40º, each of these sets of wheels (22) being provided with at least one wheel (2) or pair of wheels at the front and at least one wheel (2) or pair of wheels at the rear, with at least one of said front or rear wheels or pairs of wheels (2) being fitted with a drive motor, so that each set of wheels (2) can be moved separately;
- Extension-retraction means on the supports for the sets of wheels;
- An operating head placed on the vehicle, able to be properly positioning and angled in respect of said vehicle, comprising a thermal projection device (4) and one or more sensors;
- Electrical, pneumatic and/or hydraulic connections for supplying, controlling and manoeuvring the vehicle (1);
- Electrical and/or hydraulic connections for controlling and manoeuvring the sensors and/or the thermal projection device (4) placed on the remote controlled vehicle (1),
**characterised in that** in each of the sets of wheels (22) also comprises a set of auxiliary rolling means (40) for transversal movement, which can take two positions:
• a withdrawn or retracted position in which said auxiliary rolling means (40) is placed on the inside of the surface of the pulling wheels or chains, and
• an extended position, in which said auxiliary rolling means is located on the outside of the surface of the pulling wheels or chains in the area of contact with the conduit, preventing said contact and replacing this with contact by said auxiliary rolling means.

9. A device, according to claim 8, **characterised in that** the auxiliary sliding or rolling means (40) for transversal movement is driven by a cam (41) moved in turn by an actuator (42) which can be pneumatic, hydraulic or electro-mechanical.

10. A device, according to any of claims 8 to 9, **characterised in that** the vehicle (1) comprises three sets of wheels (22) separated from each other at an approximately regular angular distance.

11. A device, according to any of claims 8 to 10, **characterised in that** the operating head comprises a means for adjusting the operating distance to the surface of the conduit.

12. A device, according to claim 11, **characterised in that** the means for adjusting the operating distance of the operating head (13) comprises a support made up of two parallel bars (50) transversal to the longitudinal axle of the vehicle, said bars (50) having multiple perforations (51) allowing the head device to be placed at the right distance according to the requirements of each device.

13. A device, according to any of claims 8 to 12, **characterised in that** the operating head (13) also comprises plates (52) for protecting the device when this is running.

14. A device according to any of claims 8 to 13, **characterised in that** at least the wheels (2) closest to the operating head (13) are provided with a protection cover (23).

15. A device, according to any of claims 8 to 14, **characterised in that** the device for expansion/retraction of each of the sets of wheels (22) comprises a fixed axle (31) placed in the elongated structure (11), as well as a corresponding moving axle (32) able to be slid along by means of a track (33).

16. A device, according to any of claims 9 to 15, **characterised in that** the operating head (13) placed on the vehicle is able to rotate at a maximum angle of roughly 360º.

17. A device, according to any of claims 8 to 16, **characterised in that** the rear of the vehicle (1) comprises a freely rotating device for securing (14) the cables, wire or other conduits, which is pulled by the cables as the operating head requires this (13).

18. A device, according to any of claims 8 to 17, **characterised in that** the vehicle also comprises a device for detecting the thickness and/or the surface regularity of the regenerated surface.

19. A device, according to one of claims 8 to 18, **characterised in that** the vehicle also comprises at least one device for picking up the internal image of the conduit and transmitting the information to a recording, display or information processing device.

20. A device, according to any of claims 8 to 19, **characterised in that** the vehicle comprises a protection cover (18) and **in that** this comprises at least one air injection nozzle to generate a positive pressure and prevent dirt from getting inside the body lodging the device mechanisms.

## Patentansprüche

1. Verfahren zum Regenerieren von inneren Oberflächen von Leitungen mittels thermischen Metallspritzens, umfassend die Schritte:
- einführen einer Vorrichtung, welche die Sensorvorrichtungen oder thermischen Sprüheinrichtungen trägt, durch einen Schacht einer Leitungsanlage, wobei diese Vorrichtung aus einem Fahrzeug (1) besteht, das mit längs verlaufenden Walzeinrichtungen ausgestattet ist;
- einführen von elektrischen, pneumatischen und/oder hydraulischen Leitungen durch den Schacht sowie gegebenenfalls Leitungen zum Zuführen des Metalls für das thermische Spritzen;
- positionieren der Regenerierungsvorrichtung durch ein fernsteuerbares Zugsystem in einer spezifischen zu regenerierenden Position und
- erkennen der Parameter mittels Sensorvorrichtungen;
- thermisches Metallspritzen von der Vorrichtung, welche die Sensorvorrichtungen und die thermischen Sprüheinrichtungen trägt;
- weiterbewegen zu einer neuen Erkennungs- und Regenerierungsposition;
in der die Vorrichtung in die Leitung bei zurückgezogener Vorrichtung eingeführt wird, und, nach Einführen der Vorrichtung, sich die längs verlaufenden Zugeinrichtungen radial ausdehnen, bis die Vorrichtung in der Leitung zentriert ist;
**dadurch gekennzeichnet, dass dies auch umfasst:**
eine Ausdehnungsstufe von quer verlaufenden Hilfswalzeinrichtungen der Zugeinrichtung, die den Kontakt der längs verlaufenden Zugeinrichtung mit der Oberfläche der Leitung während der Ausdehnungsstufe der längs verlaufenden Zugeinrichtungen trennen und verhindern, und eine Stufe zum Zurückziehen der quer verlaufenden Hilfswalzeinrichtungen vor Start der Betriebsstufe.

2. Verfahren nach Anspruch 1, **dadurch gekennzeichnet, dass** vor dem Start des Betriebs die Vorrichtung zu der am entlegendsten Position eingeführt wird, und dadurch, dass der Vorschub zur der nächsten Regenerierungsposition durch Bewegen der Vorrichtung nach hinten erfolgt.

3. Verfahren nach einem der Ansprüche 1 bis 2, **dadurch gekennzeichnet, dass** dies das Einführen von Luft innerhalb des Körpers der Vorrichtung zum Erzeugen eines Überdrucks innerhalb des Körpers einschließt, wobei der Überdruck Schmutz vor dem Eindringen hindert.

4. Verfahren nach einem der Ansprüche 1 bis 3, **dadurch gekennzeichnet, dass** es auch die Winkelausrichtung eines Betriebskopfs umfasst, der in einer tragenden Vorrichtung eingesetzt ist.

5. Verfahren nach einem der Ansprüche 1 bis 4, **dadurch gekennzeichnet, dass** dies auch das Drehen der Vorrichtung zum thermischen Metallspritzen entlang eines umgebenden ringförmigen Umfangs mit einem maximalen Winkel von grob 360° umfasst.

6. Verfahren nach einem der Ansprüche 1 bis 5, **dadurch gekennzeichnet, dass** dies auch das Aufnehmen eines Bildes des Inneren der Leitung und Übertragen der Information zu einer Vorrichtung zum Aufzeichnen, Betrachten oder zur Informationsverarbeitung umfasst.

7. Verfahren nach einem der vorhergehenden Ansprüche, **dadurch gekennzeichnet, dass** dies auch das Messen der Dicke der Leitung vor und/oder nach der Regenerierung umfasst.

8. Vorrichtung zum Untersuchen und zum Regenerieren von inneren Oberflächen von Leitungen mittels thermischen Metallspritzens zum Ausführen des Verfahrens nach Anspruch 1, die aus Folgendem besteht:
- einem ferngesteuerten Fahrzeug (1), das Sensorvorrichtungen und eine Vorrichtung für das thermische Spritzen von Metallen (4) trägt, die in einen Schacht einer Leitungsanlage, wie einer Energieerzeugungsanlage, eingeführt werden können, wobei dieses Fahrzeug (1) eine langgestreckte Struktur (11) aufweist, die mit mindestens zwei Sätzen von Zugrädern (22) bereitgestellt ist, die in einem Winkel von grob 120° ± 40° voneinander getrennt sind, wobei jeder dieser Sätze von Rädern (22) mit mindestens einem Rad (2) oder einem Paar von Rädern an der Vorderseite und mindestens einem Rad (2) oder einem Paar von Rädern an der Rückseite bereitgestellt ist, wobei mindestens eines der Vorder- oder Hinterräder oder Paare von Rädern (2) mit einem Antriebsmotor ausgestattet ist, sodass jeder Satz von Rädern (2) separat bewegt werden kann;
- Erweiterungs-Rückzieheinrichtungen an den Trägern für die Sätze von Rädern;
- einen Betriebskopf, der an dem Fahrzeug platziert ist, der angemessen positioniert werden kann und in Bezug auf das Fahrzeug abgewinkelt ist, umfassend eine thermische Spritzvorrichtung (4) und einen oder mehrere Sensoren;
- elektrische, pneumatische und/oder hydraulische Verbindungen zum Zuführen, Steuern und Manövrieren des Fahrzeugs (1);
- elektrische und/oder hydraulische Verbindungen zum Steuern und Manövrieren der Sensoren und/oder der thermischen Spritzvorrichtung (4), die auf dem ferngesteuerten Fahrzeug (1) platziert sind,
**dadurch gekennzeichnet, dass** jedes der Sätze von Rädern (22) auch einen Satz von Hilfswalzeinrichtungen (40) für die Querbewegung umfasst, die zwei Positionen einnehmen können:
• eine eingefahrene oder zurückgezogene Position, in der die Hilfswalzeinrichtung (40) auf der Innenseite der Oberfläche der Zugräder oder -ketten angeordnet ist, und
• eine ausgefahrene Position, in der die Hilfswalzeinrichtung auf der Außenseite der Oberfläche der Zugräder oder -ketten in dem Bereich des Kontakts mit der Leitung angeordnet ist und diesen Kontakt verhindert und diesen durch den Kontakt durch die Hilfswalzeinrichtung ersetzt.

9. Vorrichtung nach Anspruch 8, **dadurch gekennzeichnet, dass** die Hilfsgleit- oder -walzeinrichtung (40) für die Querbewegung durch einen Nocken (41) angetrieben wird, der wiederum von einer Betätigungsvorrichtung (42) bewegt wird, die pneumatisch, hydraulisch oder elektromechanisch sein kann.

10. Vorrichtung nach einem der Ansprüche 8 bis 9, **dadurch gekennzeichnet, dass** das Fahrzeug (1) drei Sätze von Rädern (22) umfasst, die in einem nahezu regelmäßigen Winkelabstand voneinander getrennt sind.

11. Vorrichtung nach einem der Ansprüche 8 bis 10, **dadurch gekennzeichnet, dass** der Betriebskopf eine Einrichtung zum Einstellen des Betriebsabstands zur Oberfläche der Leitung umfasst.

12. Vorrichtung nach Anspruch 11, **dadurch gekennzeichnet, dass** die Einrichtung zum Einstellen des Betriebsabstands des Betriebskopfs (13) einen Träger umfasst, der aus zwei parallelen Stangen (50) besteht, die quer zur Längsachse des Fahrzeuges verlaufen, wobei die Stangen (50) mehrere Perforationen (51) aufweisen, die der Kopfvorrichtung ermöglichen, im richtigen Abstand gemäß den Anforderungen jeder Vorrichtung platziert zu werden.

13. Verfahren nach einem der Ansprüche 8 bis 12, **dadurch gekennzeichnet, dass** der Betriebskopf (13) auch Platten (52) zum Schützen der Vorrichtung umfasst, wenn diese läuft.

14. Verfahren nach einem der Ansprüche 8 bis 13, **dadurch gekennzeichnet, dass** mindestens die Räder (2), die dem Betriebskopf (13) am nächsten sind, mit einer Schutzabdeckung (23) bereitgestellt sind.

15. Vorrichtung nach einem der Ansprüche 8 bis 14, **dadurch gekennzeichnet, dass** die Vorrichtung zum Ausdehnen/Rückziehen jedes der Radsätze (22) eine feststehende Achse (31) umfasst, die in der langgestreckten Struktur (11) angeordnet ist, sowie eine entsprechende sich bewegende Achse (32), die mittels einer Bahn (33) daran entlang verschoben werden kann.

16. Vorrichtung nach einem der Ansprüche 9 bis 15, **dadurch gekennzeichnet, dass** der Betriebskopf (13), der an dem Fahrzeug platziert ist, mit einem maximalen Winkel von grob 360° drehen kann.

17. Vorrichtung nach einem der Ansprüche 8 bis 16, **dadurch gekennzeichnet, dass** die Rückseite des Fahrzeugs (1) eine frei drehende Vorrichtung zum Sichern (14) der Kabel, Drähte und Schaltungen umfasst, die durch die Kabel gezogen werden, während der Betriebskopf (13) dies erfordert.

18. Vorrichtung nach einem der Ansprüche 8 bis 17, **dadurch gekennzeichnet, dass** das Fahrzeug eine Vorrichtung zum Erkennen der Dicke und/oder der Oberflächenregelmäßigkeit der regenerierten Oberfläche umfasst.

19. Vorrichtung nach einem der Ansprüche 8 bis 18, **dadurch gekennzeichnet, dass** das Fahrzeug auch mindestens eine Vorrichtung zum Aufnehmen des internen Bildes der Leitung und Übertragen der Information zu einer Aufzeichnungs-, Anzeige- oder Informationsverarbeitungsvorrichtung umfasst.

20. Vorrichtung nach einem der Ansprüche 8 bis 19, **dadurch gekennzeichnet, dass** das Fahrzeug eine Schutzabdeckung (18) umfasst, und dadurch, dass diese mindestens eine Lufteinspritzdüse zum Erzeugen eines Überdrucks und zum Verhindern umfasst, dass Schmutz in den Körper, der die Vorrichtungsmechanismen beherbergt, eindringt.

## Revendications

1. Procédé pour régénérer des surfaces internes de conduits au moyen de vaporisation thermique de métal, comprenant les étapes consistant à
- insérer un dispositif portant les dispositifs capteurs ou moyens de vaporisation thermique par un trou d'homme d'une installation de conduits, ce dispositif consistant en un véhicule (1) pourvu de moyens de roulement longitudinal ;
- insérer des conduits électriques, pneumatiques et/ou hydrauliques par le trou d'homme, ainsi que des conduits pour fournir le métal pour la projection thermique, si nécessaire ;
- positionner le dispositif de régénération par un système de traction actionné à distance dans une position spécifique à régénérer, et
- détecter des paramètres au moyen de dispositifs capteurs ;
- projection thermique de métal depuis le dispositif portant les dispositifs capteurs et les moyens de vaporisation thermique ;
- passer à une nouvelle position de détection ou de régénération ;
dans lequel le dispositif est inséré dans le conduit avec le dispositif rétracté, et après que le dispositif a été inséré, les moyens de traction longitudinaux s'étendent radialement jusqu'à ce que le dispositif soit centré dans ledit conduit ;
**caractérisé en ce qu'il comprend en outre**
une étape pour l'expansion de moyens de roulement auxiliaires transversaux des moyens de traction, qui séparent et empêchent le contact des moyens de traction longitudinaux avec la surface du conduit pendant l'étape d'expansion desdits moyens de traction longitudinaux, et une étape pour la rétraction des moyens de roulement auxiliaires transversaux, avant le début de l'étape de l'opération.

2. Procédé, selon la revendication 1, **caractérisé en ce qu'**avant le début de l'opération le dispositif est inséré à la position la plus éloignée, et **en ce que** l'avancement à la prochaine position de régénération a lieu en déplaçant le dispositif vers l'arrière.

3. Procédé, selon l'une quelconque des revendications 1 à 2, **caractérisé en ce qu'**il comporte l'insertion d'air à l'intérieur du corps du dispositif pour générer une pression positive à l'intérieur dudit corps ladite pression positive empêchant la saleté de pénétrer à l'intérieur.

4. Procédé, selon l'une quelconque des revendications 1 à 3 **caractérisé en ce qu'**il comprend en outre l'orientation angulaire d'une tête opérationnelle introduite dans un dispositif porteur.

5. Procédé, selon l'une quelconque des revendications 1 à 4 **caractérisé en ce qu'**il comprend en outre la rotation du dispositif pour la vaporisation thermique de métal le long du périmètre annulaire environnant à un angle maximum de 360° environ.

6. Procédé, selon l'une quelconque des revendications 1 à 5 **caractérisé en ce qu'**il comprend en outre le choix d'une image de l'intérieur du conduit et la transmission des informations à un dispositif pour l'enregistrement, la vision ou le traitement des informations.

7. Procédé, selon l'une quelconque des revendications précédentes, **caractérisé en ce qu'**il comprend en outre la mesure de l'épaisseur du conduit avant et/ou après la régénération.

8. Dispositif pour inspecter et régénérer des surfaces internes de conduits au moyen de vaporisation thermique de métal, pour la réalisation du procédé selon la revendication 1, composé de :
- un véhicule commandé à distance (1), portant des dispositifs capteurs et un dispositif pour la projection thermique de métaux (4), capable d'être inséré dans un trou d'homme d'une installation de conduit, telle qu'une installation de production d'électricité, ce véhicule comprenant (1) une structure longiligne (11) pourvue d'au moins deux ensembles de roues de traction (22), séparés à un angle de 120° ± 40° environ, chacun de ces ensembles de roues (22) étant pourvu d'au moins une roue (2) ou une paire de roues à l'avant et au moins une roue (2) ou une paire de roues à l'arrière, avec au moins l'une desdites roues avant ou arrière ou paires de roues (2) étant pourvues d'un moteur d'entraînement, de sorte que chaque ensemble de roues (2) puisse être déplacé séparément ;
- Des moyens d'extension-rétraction sur les supports pour les ensembles de roues ;
- Une tête opérationnelle placée sur le véhicule, capable d'être convenablement positionnée et inclinée par rapport audit véhicule, comprenant un dispositif de projection thermique (4) et un ou plusieurs capteurs ;
- Des raccordements électriques, pneumatiques et/ou hydrauliques pour alimenter, commander et manoeuvrer le véhicule (1) ;
- Des raccordements électriques et/ou hydrauliques pour commander et manoeuvrer les capteurs et/ou le dispositif de projection thermique (4) placé sur le véhicule commandé à distance (1),
**caractérisé en ce que** chacun des ensembles de roues (22) comprend en outre un ensemble de moyens de roulement auxiliaires (40) pour le mouvement transversal, qui peut prendre deux positions :
• une position rentrée ou rétractée dans laquelle lesdits moyens de roulement auxiliaires (40) sont placés à l'intérieur de la surface des roues de traction ou chaînes, et
• une position déployée, dans laquelle lesdits moyens de roulement auxiliaires sont situés à l'extérieur de la surface des roues de traction ou chaînes dans la zone de contact avec le conduit, empêchant ledit contact et le remplaçant par le contact par lesdits moyens de roulement auxiliaires.

9. Dispositif, selon la revendication 8, **caractérisé en ce que** les moyens auxiliaires de glissement ou de roulement (40) pour le mouvement transversal sont entraînés par une came (41) déplacée à son tour par un actionneur (42) qui peut être pneumatique, hydraulique ou électromécanique.

10. Dispositif, selon l'une quelconque des revendications 8 à 9, **caractérisé en ce que** le véhicule (1) comprend trois ensembles de roues (22) séparés les uns des autres à une distance approximativement angulaire régulière.

11. Dispositif, selon l'une quelconque des revendications 8 à 10, **caractérisé en ce que** la tête opérationnelle comprend des moyens pour ajuster la distance opérationnelle à la surface du conduit.

12. Dispositif, selon la revendication 11, **caractérisé en ce que** les moyens pour ajuster la distance opérationnelle de la tête opérationnelle (13) comprend un support composé de deux barres parallèles (50) transversales à l'axe longitudinal du véhicule, lesdites barres (50) ayant de multiples perforations (51) permettant au dispositif tête d'être placé à la bonne distance selon les critères de chaque dispositif.

13. Dispositif, selon l'une quelconque des revendications 8 à 12, **caractérisé en ce que** la tête opérationnelle (13) comprend en outre des plaques (52) pour protéger le dispositif lorsqu'il est en fonctionnement.

14. Dispositif selon l'une quelconque des revendications 8 à 13, **caractérisé en ce qu'**au moins les roues (2) les plus proches de la tête opérationnelle (13) sont pourvues d'un couvercle de protection (23).

15. Dispositif, selon l'une quelconque des revendications 8 à 14, **caractérisé en ce que** le dispositif pour l'expansion/rétraction de chacun des ensembles de roues (22) comprend un axe fixe (31) placé dans la structure longiligne (11), ainsi qu'un axe mobile correspondant (32) capable de glisser longitudinalement au moyen d'une voie (33).

16. Dispositif, selon l'une quelconque des revendications 9 à 15, **caractérisé en ce que** la tête opérationnelle (13) placée sur le véhicule est capable de tourner à un angle maximum de 360° environ.

17. Dispositif, selon l'une quelconque des revendications 8 à 16, **caractérisé en ce que** la partie arrière du véhicule (1) comprend un dispositif de rotation libre pour fixer (14) les câbles, le fil ou autres conduits, qui est tracté par les câbles tant que la tête opérationnelle le nécessite (13).

18. Dispositif, selon l'une quelconque des revendications 8 à 17, **caractérisé en ce que** le véhicule comprend en outre un dispositif pour détecter l'épaisseur et/ou la régularité de la surface régénérée.

19. Dispositif, selon l'une des revendications 8 à 18, **caractérisé en ce que** le véhicule comprend en outre au moins un dispositif pour choisir l'image interne du conduit et transmettre les informations à un dispositif d'enregistrement, de lecture ou de traitement des informations.

20. Dispositif, selon l'une quelconque des revendications 8 à 19, **caractérisé en ce que** le véhicule comprend un couvercle de protection (18) et **en ce qu'**il comprend au moins une buse d'injection d'air pour générer une pression positive et empêcher la saleté de pénétrer dans le corps se déposant dans les mécanismes du dispositif.
